# EUROPÄISCHE PATENTSCHRIFT

(11) **EP 3 529 035 B1**
(45) Veröffentlichungstag und Bekanntmachung des Hinweises auf die Patenterteilung: **31.03.2021**
(21) Anmeldenummer: 17783490.0
(22) Anmeldetag: 11.10.2017
(51) Int. Cl.: B29C 48/92, B29C 48/10

(54) **VERFAHREN UND ANLAGE ZUR HERSTELLUNG EINER KUNSTSTOFFFOLIE**
METHOD AND FACILITY FOR PRODUCING A PLASTIC FILM
PROCÉDÉ ET INSTALLATION POUR PRODUIRE UN FILM DE MATIÈRE PLASTIQUE

(30) Priorität: 18.10.2016 DE 102016119869
(43) Veröffentlichungstag der Anmeldung: 28.08.2019
(73) Patentinhaber: Reifenhäuser GmbH & Co. KG Maschinenfabrik, 53844 Troisdorf (DE)
(72) Erfinder: FETT, Thomas, 53840 Troisdorf (DE); HILGERS, Mark, 53844 Troisdorf (DE); LETTOWSKY, Christoph, 52074 Aachen (DE); MAGER, Jens, 50968 Köln (DE); RÖSNER, Andreas, 53113 Bonn (DE); STELTER, Christian, 55218 Ingelheim (DE); VODENCAREVIC, Asmir, 90763 Fürth (DE)
(74) Vertreter: Andrejewski - Honke Patent- und Rechtsanwälte Partnerschaft mbB
(86) Internationale Anmeldenummer: PCT/EP2017/075986
(87) Internationale Veröffentlichungsnummer: WO 2018/073083

(56) Entgegenhaltungen:
- EP-A1- 0 516 992
- EP-A1- 0 522 278
- EP-A1- 1 507 182
- WO-A1-00/20190
- DE-A1- 10 047 836
- DE-A1-102004 012 488
- JP-A- H 079 551
- JP-A- H01 317 743
- JP-B2- 5 502 639
- US-A- 5 725 814
- US-A1- 2009 226 711
- VOIGT K-D ET AL: "AUTOMATISIERUNGSMOEGLICHKEITEN BEI PE-HD-BLASFOLIEANLAGEN", KUNSTSTOFFE, CARL HANSER VERLAG, MUNCHEN, DE, Bd. 80, Nr. 6, 1. Juni 1990 (1990-06-01), Seiten 682-685, XP000159859, ISSN: 0023-5563

## Beschreibung

Die Erfindung betrifft ein Verfahren zur Herstellung einer Kunststofffolie aus thermoplastischem Kunststoff in einer Folienherstellungsanlage durch Extrusion aus einer Düse - insbesondere durch Extrusion eines Folienschlauches aus einer Ringschlitzdüse eines Blaskopfes oder durch Extrusion einer Folienbahn aus einer Breitschlitzdüse -, wobei der Kunststoff bzw. die Kunststoffschmelze der Düse mittels zumindest eines Extruders zugeführt wird, wobei anschließend der Folienschlauch bzw. die Folienbahn aus der Düse extrudiert wird, vorzugsweise mit Hilfe einer Kühlvorrichtung gekühlt wird und mittels einer Wickelvorrichtung zum Folienwickel bzw. Foliencoil aufgewickelt wird. Nach besonders bevorzugter Ausführungsform betrifft die Erfindung ein Verfahren zur Herstellung einer Blasfolie aus thermoplastischem Kunststoff in einer Blasfolienanlage durch Extrusion aus einer Ringschlitzdüse eines Blaskopfes. - Die Erfindung betrifft fernerhin eine Folienherstellungsanlage zur Herstellung einer Kunststofffolie aus thermoplastischem Kunststoff mit einer Düse zur Extrusion der Kunststofffolie und bevorzugt eine Blasfolienanlage zur Herstellung einer Blasfolie aus thermoplastischem Kunststoff mit einer Ringschlitzdüse eines Blaskopfes zur Extrusion eines Folienschlauches.

Verfahren und Anlagen der oben beschriebenen Art sind aus der Praxis in verschiedenen Ausführungsformen bekannt. Zu den bekannten Blasfolienanlagen zählen Vorrichtungen, bei denen der Folienschlauch mit einem bestimmten Aufblasverhältnis durch zugeführte Luft aufgeblasen wird und mittels Kühlluft gekühlt wird. Für die Zuführung der Blasluft ist in der Regel ein Zuluftgebläse vorgesehen und ebenso ist ein Abluftgebläse für die Abführung der Luft aus dem Folienschlauch vorhanden. Der Folienschlauch wird normalerweise mittels einer Abzugsvorrichtung abgezogen und zu einer Folienbahn flachgelegt. Der flachgelegte Schlauch wird dann in einer Wickelvorrichtung zum Foliencoil aufgewickelt. Beim Aufblasen erfolgt in der Regel eine Verstreckung des Folienschlauches in Extrusionsrichtung. Dabei kann auch eine Querverstreckung quer zur Extrusionsrichtung stattfinden.
Im laufenden Betrieb einer solchen Blasfolienanlage kann es zu Unregelmäßigkeiten bzw. Anomalien bei der Zuführung und/oder Abführung der Blasluft oder auch beim Kühlen des Folienschlauches mittels Kühlluft kommen. Auch Variationen der Temperatur der Ringschlitzdüse sind möglich. Solche Unregelmäßigkeiten bzw. Anomalien können im Extremfall zum Abreißen und/oder Zusammenfallen des Folienschlauches führen. Insbesondere können durch solche Unregelmäßigkeiten bei den Herstellungsbedingungen aber unerwünschte Dickstellen und Dünnstellen in der aufgewickelten Folienbahn resultieren. Das kann letztendlich dazu führen, dass ein gesamter Foliencoil von minderer Qualität ist und im Extremfall verworfen werden muss.

Bei den bekannten Blasfolienanlagen, die zum Beispiel in den Druckschriften EP 0 516 992 A1, US 5 725 814 A und US 2009/226711 A1 offenbart sind, können die für die Anomalien bzw. Störzustände verantwortlichen Variationen der Herstellungsbedingungen nicht immer ohne weiteres bzw. nicht immer rechtzeitig erkannt werden. Das gilt für verschiedene Anlagenkomponenten einer solchen Blasfolienanlage. Die Folgen können insbesondere dann gravierend sein, wenn eine Messvorrichtung - beispielsweise zur Messung des Luftdruckes innerhalb des Folienschlauches oder zur Messung der Temperatur der Kühlluft oder dergleichen ausfällt. Ein solcher Ausfall von Messvorrichtungen bzw. Messsensoren kann bei den bislang bekannten Anlagen nicht ausreichend kompensiert werden und insoweit kann es bei Auftreten schwerwiegender Anomalien sogar zum Stillstand der gesamten Blasfolienanlage kommen und dann eventuell auch zu unerwünschten längeren Stillstandszeiten.

Demgegenüber liegt der Erfindung das technische Problem zugrunde, ein Verfahren der eingangs genannten Art anzugeben, bei dem Anlagenparameter auf einfache und relativ präzise Weise ermittelt werden können und bei dem ein wenig aufwendiges, funktionssicheres und rechtzeitiges Erkennen von Störzuständen bzw. Anomalien möglich ist. Der Erfindung liegt weiterhin das technische Problem zugrunde, eine entsprechende Folienherstellungsanlage anzugeben.

Zur Lösung dieses technischen Problems lehrt die Erfindung ein Verfahren gemäß dem Anspruch 1 zur Herstellung einer Kunststofffolie aus thermoplastischem Kunststoff in einer Folienherstellungsanlage gemäß dem Anspruch 11.

Nach besonders bevorzugter Ausführungsform der Erfindung wird bei einer Abweichung zumindest eines ermittelten Wertes des Ausgangsparameters von dem zumindest einen Wert bzw. Messwert des Referenzparameters eine Anomalie des Ausgangsparameters signalisiert. Die Signalisierung erfolgt insbesondere durch ein visuelles und/oder akustisches Signal. Es liegt im Rahmen der Erfindung, dass die Signalisierung der Anomalie bzw. eine entsprechende Alarmmeldung über ein HMI (Human Machine Interface) und/oder durch eine Cloud-Anbindung (per E-Mail, SMS und dergleichen) vermittelt werden kann. Gemäß einer sehr bevorzugten Ausführungsvariante wird die Abweichung bzw. Anomalie dokumentiert, insbesondere durch Abspeichern in einem Speicher bzw. in einem unabhängigen Speicher. Dabei kann es sich um eine Datenbank, eine Cloud oder dergleichen Speicher handeln. Mit der bevorzugten Dokumentierung bzw. Abspeicherung werden spätere Auswertungen und/oder Zuordnungen erleichtert.

Beim Erkennen oder Signalisieren der vorstehend genannten Abweichung bzw. Anomalie sind grundsätzlich die folgenden Reaktionen möglich: Die gesamte Folienherstellungsanlage wird abgeschaltet und/oder einzelne Anlagenkomponenten werden abgeschaltet und/oder bei Anlagenkomponenten mit Einstellmöglichkeiten werden die Anlagenkomponenten eingestellt und zwar zweckmäßigerweise so eingestellt, dass Einfluss auf die gemessenen Eingangsparameter und somit zweckmäßigerweise auf den daraus ermittelten Ausgangsparameter genommen werden kann. Insoweit erfolgt in Abhängigkeit von der erkannten Abweichung bzw. Anomalie vorzugsweise eine Steuerung und/oder Regelung der einzelnen Anlagenkomponenten. Beispielsweise kann in Abhängigkeit von dem Erkennen einer Abweichung bzw. Anomalie die Temperatur einer Temperiervorrichtung und/oder die Gebläsedrehzahl eines Gebläses und/oder die Öffnungsweite einer Öffnung gesteuert und/oder geregelt werden.

Der Begriff Parameter (insbesondere Referenzparameter, Eingangsparameter, Ausgangsparameter) steht im Rahmen der Erfindung für eine Messgröße bzw. physikalische Messgröße, wie beispielsweise für die Temperatur, die Drehzahl, das Drehmoment oder die Öffnungsweite einer Gasdurchtrittsöffnung. Messwert meint im Rahmen der Erfindung den gemessenen Wert dieses Parameters bzw. dieser Messgröße. - Dass ein Ausgangsparameter dem Referenzparameter entspricht, meint im Rahmen der Erfindung, dass Ausgangsparameter und Referenzparameter die gleiche Messgröße bzw. physikalische Messgröße - beispielsweise die Temperatur - betreffen.

Eine besonders bevorzugte Ausführungsform der Erfindung ist dadurch gekennzeichnet, dass zumindest ein Referenzparameter bzw. der Referenzparameter mit zumindest einer Referenzmessvorrichtung in einem Referenzbetrieb der Folienherstellungsanlage gemessen wird. Referenzbetrieb der Folienherstellungsanlage meint dabei insbesondere den störungsfreien Normalbetrieb der Anlage. Ein in diesem Zustand gemessener Referenzparameter - beispielsweise eine Temperatur - wird dann im Rahmen des erfindungsgemäßen Verfahrens mit dem ermittelten bzw. berechneten entsprechenden Ausgangsparameter (ermittelte Temperatur) verglichen. Die Messung des Referenzparameters in dem Referenzbetrieb der Folienherstellungsanlage erfolgt nach einer empfohlenen Ausführungsform als Inline-Messung während eines kontinuierlichen Referenzbetriebs der Anlage. Gemäß einer weiteren Ausführungsform kann die Messung des Referenzparameters mit der Referenzmessvorrichtung aber auch offline erfolgen. Eine solche Offline-Messung des Referenzparameters bietet sich beispielsweise an, wenn es sich bei dem Referenzparameter um eine Einzelschichtdicke in einem Folienlaminat, eine Zugfestigkeit der Folie oder dergleichen handelt.

Nach einer anderen Ausführungsform der Erfindung kann der Referenzparameter bzw. zumindest ein Referenzparameter als Erfahrungsparameter vorgegeben sein. Das bedeutet, dass der Referenzparameter nicht zwingend im Rahmen des erfindungsgemäßen Verfahrens gemessen werden muss, sondern dass zumindest ein Wert bzw. ein Wert des Referenzparameters bereits als Erfahrungsparameter bzw. Erfahrungswert vorliegt. Ein solcher Erfahrungsparameter bzw. Erfahrungswert kann aus früheren Messungen stammen oder das Ergebnis von Ermittlungen bzw. Berechnungen sein.

Es liegt im Rahmen der Erfindung, dass zumindest zwei verschiedene Eingangsparameter mit Hilfe von Messvorrichtungen gemessen werden und dass aus diesen gemessenen Eingangsparametern mit einer Auswertungseinrichtung ein Ausgangsparameter ermittelt wird. So können insbesondere mit Messvorrichtungen Eingangsparameter wie Temperatur, Volumenstrom, Gebläsedrehzahl und dergleichen gemessen werden und daraus kann mit der Auswertungseinrichtung zumindest ein Ausgangsparameter - beispielsweise eine Schichtdicke des Folienschlauches - ermittelt werden. Grundsätzlich kann im Rahmen der Erfindung aber auch zumindest ein Eingangsparameter als fester bzw. konstanter Anlagenparameter vorgegeben werden und zur Ermittlung des Ausgangsparameters eingesetzt werden. Bei diesen fest vorgegebenen Anlagenparameter bzw. Eingangsparameter kann es sich beispielsweise um eine geometrische Größe handeln, z. B. eine Öffnungsweite oder Querschnittsfläche oder dergleichen. Nichtsdestoweniger werden im Rahmen des erfindungsgemäßen Verfahrens zumindest zwei Eingangsparameter, vorzugsweise zumindest drei Eingangsparameter (als Eingangsparameter mit variablen Messwerten) mit Messvorrichtungen bzw. Messsensoren gemessen. Der Ausgangsparameter wird dann aus dem zumindest einen vorgegebenen Eingangsparameter und den weiteren gemessenen Eingangsparametern ermittelt. Bei Abweichung des auf diese Weise ermittelten Wertes des Ausgangsparameters von dem Wert/Messwert des Referenzparameters wird die Anomalie des Ausgangsparameters erkannt und vorzugsweise signalisiert. Dann kann - wie oben beschrieben - Einfluss auf die Folienherstellungsanlage und/oder auf Anlagenkomponenten bzw. auf die Steuerung der Folienherstellungsanlage und/oder der Anlagenkomponenten ausgeübt werden. Die oben genannte Anomalie des Ausgangsparameters kann im Übrigen auch auf Eingangsparameter zurückzuführen sein, die aus Messungen mit gestörten bzw. rekalibrierten Messeinrichtungen bzw. Sensoren resultieren.

Nach einer Ausführungsform der Erfindung kann der zumindest eine Referenzparameter bzw. der Referenzwert des Referenzparameters auch berechnet werden bzw. unter Zugrundelegung anderer bekannter Parameter berechnet werden. Eine solche Berechnung des Referenzparameters ist dann zweckmäßig, wenn die Messung des Referenzparameters mit einer Referenzmessvorrichtung nicht oder nicht ohne weiteres möglich ist. - Es liegt weiterhin im Rahmen der Erfindung, dass zumindest ein Eingangsparameter berechnet wird. Auch hier ist die Berechnung zumindest eines Eingangsparameters dann sinnvoll, wenn eine Messung des Eingangsparameters nicht oder nicht ohne weiteres möglich ist. Der betreffende Eingangsparameter wird dann anhand von bekannten Parametern bzw. Zustandsparametern berechnet. Dieser berechnete Eingangsparameter geht dann zweckmäßigerweise in die Ermittlung des Ausgangsparameters ein. - Entsprechend einer Ausführungsform der Erfindung kann dann der Ausgangsparameter aus den gemessenen Eingangsparametern, gegebenenfalls aus dem zumindest einen festen vorgegebenen Eingangsparameter und eventuell zusätzlich aus zumindest einem berechneten Eingangsparameter ermittelt werden. Bei Abweichung des Ausgangsparameters vom Referenzparameter kann dann wiederum wie oben beschrieben verfahren werden.

Gemäß einer sehr empfohlenen Ausführungsform des erfindungsgemäßen Verfahrens kann bei der Auswertung wie folgt verfahren werden. Es wird zunächst ermittelt, welcher Werte-Satz von Eingangsparametern bzw. welche Werte-Sätze von Eingangsparametern zu dem im störungsfreien Normalbetrieb gemessenen Wert des Referenzparameters passen. Im laufenden Betrieb der Anlage werden dann später die jeweils gemessenen bzw. ermittelten aktuellen Werte-Sätze der Eingangsparameter mit den dem Referenzwert des Referenzparameters entsprechenden Werte-Satz an Eingangsparametern verglichen. Wenn eine Übereinstimmung bzw. eine quasi-Übereinstimmung festgestellt wird, erfolgt zweckmäßigerweise keine Signalisierung bzw. Alarmmeldung. Bei Feststellung einer Abweichung bzw. Anomalie wird diese dagegen signalisiert bzw. es wird eine entsprechende Alarmmeldung signalisiert und/oder gesendet.

Im Rahmen des erfindungsgemäßen Verfahrens wird der Kunststoff bzw. die Kunststoffschmelze mittels zumindest eines Extruders der Düse - insbesondere der Ringschlitzdüse oder Breitschlitzdüse - zugeführt. Bei der Erzeugung bzw. Koextrusion einer mehrschichtigen Folie werden zweckmäßigerweise zwei oder mehr Extruder zur Zuführung der entsprechenden Kunststoffschmelzen eingesetzt. Gemäß einer Ausführungsvariante wird der aus einem Extruder austretende Kunststoff bzw. schmelzflüssige Kunststoff vor dem Eintritt in die Düse durch zumindest ein Reinigungssieb geführt.

Nach einer Ausführungsform der Erfindung ist der zumindest eine Referenzparameter bzw. Ausgangsparameter zumindest ein den eingesetzten Kunststoff betreffender Parameter aus der Gruppe "Rohstoffdichte, Schüttdichte, Dosierungsmenge, Schmelzedichte, Förderrate, Schmelzeleckage". Die zur Ermittlung des entsprechenden Ausgangsparameters einzusetzenden bzw. zu messenden Eingangsparameter sind dann vorzugsweise Parameter aus der Gruppe "Schmelzedruck, Extrudertemperatur, Extruderdrehzahl, Extruderdrehmoment, Schmelzetemperatur". - Rohstoffdichte meint im Rahmen der Erfindung insbesondere die Dichte des zur Herstellung der Kunststofffolie eingesetzten Kunststoffes bzw. die Dichte der eingesetzten Kunststoffe. - Schüttdichte meint im Rahmen der Erfindung die Dichte des in der erfindungsgemäßen Anlage eingesetzten Kunststoffes bzw. Kunststoffgranulates, insbesondere in einem dem Extruder vorgeschalteten Trichter. Dosierungsmenge meint im Rahmen der Erfindung die dem Extruder zugeführte Kunststoffmenge. Weiterhin meint Schmelzedichte im Rahmen der Erfindung insbesondere die Dichte der der Düse zugeführten Kunststoffschmelze und Förderrate bezieht sich insbesondere auf die Menge der der Düse zugeführten Kunststoffschmelze. - Schmelzedruck und Extrudertemperatur beziehen sich insbesondere auf den im Extruder gemessenen Druck bzw. die im Extruder gemessene Temperatur. Extruderdrehzahl und Extruderdrehmoment betreffen die Drehzahl und das Drehmoment der Extruderschnecke. - Wenn der schmelzflüssige Kunststoff in Förderrichtung vor der Düse nach bevorzugter Ausführungsform durch zumindest ein bzw. durch ein Reinigungssieb geführt wird, können die Eingangsparameter (zusätzlich) aus der Gruppe "Schmelzedruck vor dem Reinigungssieb, Schmelzedruck hinter dem Reinigungssieb, Betriebsstunden des Reinigungssiebes" ausgewählt werden. Bei den Betriebsstunden des Reinigungssiebes kann es sich um einen fest vorgegebenen - und somit nicht aktuell zu messenden - Eingangsparameter handeln.

Eine Ausführungsform der Erfindung ist dadurch gekennzeichnet, dass als Ausgangsparameter bzw. Referenzparameter die Rohstoffdichte (des Kunststoffes bzw. der Kunststoffe) verwendet wird. Auf diese Weise kann frühzeitig der eventuelle Einsatz eines falschen bzw. verwechselten Rohstoffes detektiert werden. Somit ist eine frühzeitige Detektion von rohstoffbedingten Produktionsproblemen aufgrund von Anwenderfehlern und/oder Lagerfehlern und/oder Chargen-Schwankungen sowie der daraus resultierenden Verarbeitungsprobleme möglich.

Anspruch 2 stellt eine besonders empfohlene Ausführungsform des erfindungsgemäßen Verfahrens dar. Es liegt im Rahmen der Erfindung, dass bei diesem Verfahren die Kunststoffschmelze durch den Extruder dem Blaskopf bzw. der Ringschlitzdüse zugeführt wird und der Folienschlauch aus der Ringschlitzdüse extrudiert wird. Zweckmäßigerweise wird der Folienschlauch dabei vertikal nach oben extrudiert. Es liegt weiterhin im Rahmen der Erfindung, dass durch den Blaskopf Zuluft zum Auflasen des Folienschlauches zugeführt wird und zwar zweckmäßigerweise mit Hilfe zumindest eines Zuluftgebläses. Fernerhin liegt es im Rahmen der Erfindung, dass aus dem Folienschlauch Abluft abgesaugt wird und zwar zweckmäßigerweise mit Hilfe zumindest eines Abluftgebläses. Der Folienschlauch wird vorzugsweise mit Hilfe einer Abzugsvorrichtung abgezogen und zwar mit einer bestimmten Abzugsgeschwindigkeit. Es liegt im Rahmen der Erfindung, dass das Aufblasverhältnis dem Quotienten aus dem Durchmesser des Folienschlauches und dem Durchmesser der Ringschlitzdüse entspricht. Zweckmäßigerweise wird der extrudierte Folienschlauch mittels einer Kühlvorrichtung gekühlt und zwar empfohlenermaßen durch Beaufschlagung mit Kühlluft. Die Kühlluft kann dabei insbesondere an der Außenoberfläche des Folienschlauches entlangströmen.

Es liegt im Rahmen der Erfindung, dass zu Beginn des Betriebes bzw. laufenden Betriebes einer erfindungsgemäßen Anlage die Eingangsparameter - soweit möglich - zunächst eingestellt werden. Dann werden erfindungsgemäß bestimmte Eingangsparameter zur Ermittlung des Ausgangsparameters gemessen bzw. laufend gemessen, um insbesondere Variationen der Eingangsparameter zu erfassen. Zur Messung der Eingangsparameter sind zweckmäßigerweise entsprechende Messvorrichtungen bzw. Messsensoren vorgesehen. So kann die Blaskopftemperatur bzw. Ringschlitzdüsentemperatur sowie die Extrudertemperatur mit einem Temperatursensor gemessen werden. Anstelle der Blaskopftemperatur bzw. Ringschlitzdüsentemperatur kann auch die Schmelzetemperatur als Eingangsparameter gemessen werden. Die Messung der Extruderdrehzahl kann mit einem Drehzahlsensor erfolgen und die Messung des Extruderdrehmomentes als Eingangsparameter kann mit einem Drehmomentsensor durchgeführt werden. Ebenso lässt sich der Extruderdrduck zweckmäßigerweise mit einem Drucksensor messen. Nach einer Ausführungsvariante ergibt sich die Abzugsgeschwindigkeit des Folienschlauches aus der Drehgeschwindigkeit der im Rahmen einer Abzugsvorrichtung bevorzugt eingesetzten Abzugsrollen. Auch hier können entsprechende Messsensoren eingesetzt werden. Für die Bestimmung des Aufblasverhältnisses des Folienschlauches kann der Durchmesser des Folienschlauches gemessen werden und anschließend der Quotient aus dem Durchmesser der Folienschlauches und dem Durchmesser der Ringschlitzdüse gebildet werden. Der Durchmesser der Ringschlitzdüse kann ein fest vorgegebener Anlagenparameter (als Eingangsparameter) sein, dieser Durchmesser kann aber auch gemessen werden. Alternativ kann für die Bestimmung des Aufblasverhältnisses auch die Breite B des flachgelegten Folienschlauches gemessen werden und daraus der Durchmesser D des Folienschlauches nach der Gleichung D = 2B/π ermittelt werden und anschließend kann wiederum der Quotient aus dem Durchmesser D des Folienschlauches und dem Durchmesser der Ringschlitzdüse zur Ermittlung des Aufblasverhältnisses gebildet werden. - Es liegt im Rahmen der Erfindung, dass die Dicke bzw. die Gesamtschichtdicke der Folie kontinuierlich im laufenden Betrieb gemessen wird und zwar vorzugsweise berührungslos. Gemäß einer empfohlenen Ausführungsform der Erfindung wird die Dicke bzw. die Gesamtschichtdicke der Folie mittels eines Durchstrahlverfahrens und/oder mittels eines Rückstreumessverfahrens gemessen.

Nach einer weiteren bevorzugten Ausführungsform des erfindungsgemäßen Verfahrens ist der Referenzparameter bzw. der Ausgangsparameter die "Breite" bzw. die "Breitenänderung" des Folienschlauches und dann sind die Eingangsparameter zur Bestimmung des Ausgangsparameters aus der Gruppe "Drehzahl des Zuluftgebläses, Öffnungsweite bzw. Öffnungsquerschnitt der Zuluftzuführung, Drehzahl des Abluftgebläses, Position des aufgeblasenen Folienschlauches" auszuwählen. Die genannten Drehzahlen werden vorzugsweise jeweils mittels eines Drehzahlsensors gemessen. Bei der Öffnungsweite bzw. bei dem Öffnungsquerschnitt der Zuluftzuführung kann es sich um eine feste vorgegebene Größe oder auch um eine im Rahmen des erfindungsgemäßen Verfahrens zu messende Öffnungsweite bzw. einen zu messenden Öffnungsquerschnitt handeln. Die Position des aufgeblasenen Folienschlauches wird zweckmäßigerweise mit entsprechenden Positionssensoren gemessen.

Eine weitere bevorzugte Ausführungsform des erfindungsgemäßen Verfahrens zeichnet sich dadurch aus, dass die Kunststofffolie bzw. der Folienschlauch als mehrschichtiger Folienschlauch extrudiert bzw. koextrudiert wird, dass dazu eine Mehrzahl von Extrudern eingesetzt wird, dass der Referenzparameter bzw. Ausgangsparameter die "Verteilung der Einzelschichtdicken" des mehrschichtigen Folienschlauches ist und dass die Eingangsparameter aus der Gruppe "Blaskopftemperatur bzw. Ringschlitzdüsentemperatur, Extruderdrehzahlen, Extruderdrehmomente, Extrudertemperaturen, Extruderdrücke, Abzugsgeschwindigkeit, Gesamtschichtdicke, Aufblasverhältnis" ausgewählt werden. Die Ermittlung bzw. Messung der Eingangsparameter erfolgt zumindest zum Teil wiederum mit Hilfe geeigneter Messvorrichtungen bzw. Messsensoren.

Fernerhin ist eine bevorzugte Ausführungsform des erfindungsgemäßen Verfahrens dadurch gekennzeichnet, dass der Referenzparameter bzw. Ausgangsparameter die "Wickeldichte" des erzeugten Folienwickels bzw. Foliencoils ist und dass die Eingangsparameter aus der Gruppe "Durchmesser der Wickelwelle, Wanddicke der Wickelhülse, Durchmesser des Folienwickels, theoretischer Durchmesser des Folienwickels" ausgewählt werden. In der Wickelvorrichtung wird zweckmäßigerweise die Folie bzw. der flachgelegte Folienschlauch mittels einer Wickelwelle auf dieser Wickelwelle aufgewickelt und zwar auf einer auf die Wickelwelle aufgebrachte bzw. aufgeschobene Wickelhülse. Bei dem Durchmesser der Wickelwelle und/oder der Wanddicke der Wickelhülse kann es sich um fest vorgegebene Eingangsparameter handeln oder auch um im Rahmen des Verfahrens zu messende Eingangsparameter. Der Durchmesser des Folienwickels wird mit einer entsprechenden Messvorrichtung gemessen. Der theoretische Durchmesser des Folienwickels wird als fester Eingangsparameter für die Ermittlung des Ausgangsparameters vorgegeben.

Eine bevorzugte Ausführungsform des erfindungsgemäßen Verfahrens zeichnet sich dadurch aus, dass eine Mehrzahl von Referenzparametern, nämlich zumindest zwei Referenzparameter, vorzugsweise zumindest drei Referenzparameter zur Verfügung gestellt wird/werden und dass eine Mehrzahl bzw. Vielzahl von Eingangsparametern gemessen wird, aus welchen Eingangsparametern eine Mehrzahl von - den Referenzparametern entsprechenden - Ausgangsparametern ermittelt wird und dass bei einer Abweichung zumindest eines ermittelten Wertes eines Ausgangsparameters von zumindest einem Wert des Referenzparameters eine Anomalie des Ausgangsparameters erkannt und vorzugsweise signalisiert wird. Auf die Erkennung der Abweichung bzw. Anomalie kann als Reaktion erfolgen, dass die gesamte Anlage abgeschaltet wird und/oder zumindest eine Anlagenkomponente abgeschaltet wird und/oder eine Steuerung und/oder Regelung von einstellbaren Parametern der Anlage bzw. der Anlagenkomponenten stattfindet.

Wie bereits oben erläutert, liegt es im Rahmen der Erfindung, dass die Referenzparameter bzw. die Werte der Referenzparameter in einem Referenzbetrieb bzw. in einem störungsfreien Normalbetrieb der Anlage gemessen werden. Außerdem wurde erläutert, dass zumindest ein Referenzparameter auch als Erfahrungswert vorgegeben werden kann. Somit ist es im Rahmen der Erfindung möglich, dass alle Referenzparameter in einem Referenzbetrieb der Anlage gemessen werden oder dass ein Teil der Referenzparameter im Referenzbetrieb der Anlage gemessen wird und ein anderer Teil der Referenzparameter als Erfahrungsparameter vorgegeben wird oder dass alle zugrunde gelegten Referenzparameter als Erfahrungsparameter vorgegeben werden. Nach einer Ausführungsform der Erfindung wird aus einer Mehrzahl von Referenzparametern ein Referenzmodell ermittelt. Bei diesem Referenzmodell handelt es sich gleichsam um ein Klassifikationsmodell, das aus den Messdaten des Referenzbetriebes (störungsfreier Normalbetrieb) ermittelt wird. Aus einer Mehrzahl bzw. Vielzahl von Eingangsparametern wird dann eine Mehrzahl von Ausgangsparametern berechnet und daraus wird wiederum ein Ausgangsmodell ermittelt. Bei Abweichung dieses Ausgangsmodells von dem Referenzmodell ist eine Anomalie des Ausgangsmodells erkennbar bzw. signalisierbar. Darauf kann dann entsprechend reagiert werden.

Zweckmäßigerweise handelt es sich bei der Auswertungseinrichtung zur Ermittlung zumindest eines Ausgangsparameters aus den Eingangsparametern um zumindest einen Computer. Die Übermittlung der gemessenen Werte der Eingangsparameter kann drahtgebunden oder drahtlos an die Auswertungseinrichtung bzw. an den Computer erfolgen. - Die einzelnen Messvorrichtungen bzw. Messsensoren zur Messung der Eingangsparameter sind in bzw. an den Anlagenkomponenten der erfindungsgemäßen Folienherstellungsanlage angeordnet. Es liegt im Rahmen der Erfindung, dass die Eingangsparameter kontinuierlich oder im Wesentlichen kontinuierlich gemessen werden. Eine bevorzugte Ausführungsform der Erfindung ist dadurch gekennzeichnet, dass zumindest ein Teil, insbesondere der Großteil der Eingangsparameter und gemäß einer Ausführungsvariante alle Eingangsparameter laufend gemessen wird/werden und dass daraus der zumindest eine Ausgangsparameter bzw. das Ausgangsmodell ermittelt wird. Zweckmäßigerweise wird dabei mit einer Tastperiode von 0,5 s bis 10min, vorzugsweise von 1 s bis 1 min und bevorzugt von 1 s bis 10 s gearbeitet. Nach einer Ausführungsvariante fließt in die Auswertung jedes gemessenen Eingangsparameters eine Mehrzahl bzw. eine Vielzahl von Messdaten ein. Dabei wird der Messwert des Eingangsparameters beispielsweise als Durchschnittswert aus diesen Messdaten gebildet. Für die Ermittlung des Messwertes jedes Eingangsparameters werden empfohlenermaßen mehr als 20, bevorzugt mehr als 30 und sehr bevorzugt mehr als 100 Messdaten bzw. Datenpunkte erfasst.

Zur Lösung des technischen Problems lehrt die Erfindung weiterhin eine Folienherstellungsanlage zur Herstellung einer Kunststofffolie aus thermoplastischem Kunststoff mit einer Düse zur Extrusion der Kunststofffolie - insbesondere mit einer Ringschlitzdüse eines Blaskopfes zur Extrusion eines Folienschlauches oder mit einer Breitschlitzdüse zur Extrusion einer Folienbahn -, wobei zumindest ein Extruder vorgesehen ist, mit dem der Kunststoff bzw. die Kunststoffschmelze der Düse zuführbar ist, wobei der Folienschlauch bzw. die Folienbahn aus der Düse extrudierbar ist wobei eine Kühlvorrichtung vorhanden ist, mit der der extrudierte Folienschlauch bzw. die extrudierte Folienbahn gekühlt wird und wobei fernerhin eine Wickelvorrichtung vorgesehen ist, mit der der abgezogene und zweckmäßigerweise flachgelegte Folienschlauch bzw. die abgezogene Folienbahn zu einem Folienwickel bzw. zu einem Foliencoil aufwickelbar ist,
wobei fernerhin zumindest eine Messvorrichtung, insbesondere zumindest ein Messsensor zur Messung von Eingangsparametern vorgesehen ist, wobei die zumindest eine Messvorrichtung bzw. der zumindest eine Messsensor im Bereich des Extruders und/oder im Bereich der Düse und/oder im Bereich einer Zuluftzuführung und/oder im Bereich einer Abluftabführung und/oder im Bereich des extrudierten Folienschlauches bzw. der extrudierten Folienbahn und/oder im Bereich einer Kühlvorrichtung und/oder im Bereich einer Abzugsvorrichtung und/oder im Bereich einer Verstreckeinrichtung und/oder im Bereich einer Wickelvorrichtung angeordnet ist, wobei weiterhin zumindest eine Auswertungseinrichtung vorhanden ist, die mit der Maßgabe eingerichtet ist, dass aus den gemessenen Eingangsparametern zumindest ein Ausgangsparameter ermittelbar ist. Nach besonders bevorzugter Ausführungsform der Erfindung wird der ermittelte Ausgangsparameter mit dem bzw. mit einem zur Verfügung gestellten Referenzparameter verglichen. Gemäß empfohlener Ausführungsform ist zumindest eine Signaleinrichtung vorgesehen, mit der eine Abweichung des Ausgangsparameters von dem Referenzparameter signalisierbar ist. Die Signaleinrichtung ist vorzugsweise als visuelle und/oder akustische Signaleinrichtung eingerichtet. - Es liegt im Rahmen der Erfindung, dass die Auswertungseinrichtung als Computer ausgebildet ist. Zweckmäßigerweise ist eine Mehrzahl von Messvorrichtungen bzw. von Messsensoren zur Messung der Eingangsparameter vorhanden.

Es liegt weiterhin im Rahmen der Erfindung, dass die Düse, insbesondere die Ringschlitzdüse eines Blaskopfes beheizbar ist und dass die Temperatur der Düse bzw. der Ringschlitzdüse mittels zumindest eines Temperatursensors messbar ist. Es ist zumindest ein Extruder zur Zuführung des Kunststoffes bzw. der Kunststoffschmelze zu der Düse bzw. zu der Ringschlitzdüse vorgesehen. Zweckmäßigerweise ist zwischen Extruder und Düse zumindest ein Reinigungssieb zwischengeschaltet. Gemäß einer Ausführungsform ist zumindest eine Messvorrichtung bzw. zumindest ein Messsensor zur Messung eines Eingangsparameters im Bereich des zumindest einen Extruders und/oder im Bereich des zumindest einen Reinigungssiebes positioniert. Bei Extrusion einer mehrschichtigen Folie wird empfohlenermaßen eine Mehrzahl von Extrudern eingesetzt.

Bei einer im Rahmen der Erfindung bevorzugten Blasfolienanlage wird der Folienschlauch nach Extrusion aus der Ringschlitzdüse durch zugeführte Zuluft aufgeblasen, wobei die Zuluft mittels einer Zuluftzuführungsvorrichtung zugeführt wird und wobei die Zuluftzuführungsvorrichtung zumindest ein Zuluftgebläse aufweist. Die Zuluftzuführungsvorrichtung ist zweckmäßigerweise im Bereich des Blaskopfes angeordnet und die Zuluft wird bevorzugt durch den Blaskopf in den Folienschlauch eingeblasen. Es liegt im Rahmen der Erfindung, dass aus dem Folienschlauch abzuführende Abluft mittels einer Abluftabführungsvorrichtung abgeführt wird, welche Abluftabführungsvorrichtung zumindest ein Abluftgebläse aufweist. Die Abführung der Abluft erfolgt zweckmäßigerweise durch den Blaskopf. - Eine im Rahmen der Erfindung vorgesehene Kühlvorrichtung ist nach einer Ausführungsvariante am Blaskopf angeordnet und zweckmäßigerweise wird damit Kühlluft an die Außenoberfläche der extrudierten Folie bzw. des extrudierten Folienschlauches angeblasen.

Es liegt weiterhin im Rahmen der Erfindung, dass bei einer bevorzugt vorgesehenen Blasfolienherstellungsanlage der Folienschlauch von unten aus einem Blaskopf bzw. aus einer Ringschlitzdüse vertikal nach oben extrudiert wird und dass dann bevorzugt die Kühlluft von unten an die Außenoberfläche des Folienschlauches angeblasen wird. Bei vertikal nach oben extrudiertem Folienschlauch ist die Abzugsvorrichtung zweckmäßigerweise oberhalb des Blaskopfes angeordnet. Eine im Rahmen der Erfindung eingesetzte Abzugsvorrichtung weist zumindest zwei Abzugsrollen für den Abzug der Folie bzw. des Folienschlauches auf. Es liegt im Rahmen der Erfindung, dass ein Folienschlauch im Bereich der Abzugsvorrichtung flachgelegt wird. Gemäß einer Ausführungsvariante wird im Zusammenhang mit dem Folienabzug eine Reversiereinheit eingesetzt.

Eine im Rahmen der Erfindung eingesetzte Wickelvorrichtung zum Aufwickeln des Folienschlauches bzw. der Folienbahn weist zweckmäßigerweise eine rotierbare Wickelwelle auf. Auf dieser Wickelwelle ist vorzugsweise eine Wickelhülse aufgeschoben, auf welche die Folie bzw. die Folienbahn aufgewickelt wird bzw. zum Folienwickel aufgewickelt wird. Nach dem Fertigwickeln wird der Folienwickel mitsamt der Wickelhülse von der Wickelwelle der Wickelvorrichtung entfernt. Es empfiehlt sich, dass ein Drehzahlsensor zur Messung der Drehzahl der Wickelwelle vorhanden ist.

Der Erfindung liegt die Erkenntnis zugrunde, dass das erfindungsgemäße Verfahren und die erfindungsgemäße Folienherstellungsanlage eine einfache und kostengünstige Möglichkeit bieten, um einen Störzustand bzw. eine Anomalie bei der Folienherstellung funktionssicher und präzise zu erkennen bzw. anzuzeigen. Zur Verwirklichung dieser Maßnahmen sind lediglich relativ einfache, wenig komplexe und kostengünstige Anlagenkomponenten erforderlich. Bei Realisierung der erfindungsgemäßen Messungen und Auswertungen kann insbesondere der Betrieb der Anlage bzw. der Betrieb von Anlagenkomponenten bei Bedarf rechtzeitig eingestellt werden, um nachteilhafte gravierende Schäden an der Anlage zu vermeiden, die eventuell zu längeren Stillstandszeiten führen würden. Störzustände bzw. Anomalien in der Folienherstellungsanlage bzw. bei Durchführung des Folienherstellungsverfahrens können zügig, eindeutig und präzise auf einfache Weise erkannt und angezeigt bzw. signalisiert werden. Aufgrund der eindeutigen und schnellen Erkennung von Abweichungen zwischen Referenzparameter und Ausgangsparametern kann bei Bedarf eine gezielte Steuerung und/oder Regelung von Anlagenkomponenten vorgenommen werden, um den Abweichungen bzw. Anomalien entgegenzuwirken und um möglichst den Normalzustand wiederherzustellen. Insgesamt zeichnen sich die erfindungsgemäßen Maßnahmen durch geringen Aufwand und geringe Kosten aus.

Nachfolgend wird die Erfindung anhand einer lediglich ein Ausführungsbeispiel darstellenden Zeichnung näher erläutert. Es zeigen in schematischer Darstellung:
- Fig. 1: einen Vertikalschnitt durch eine erfindungsgemäße Blasfolienanlage zur Erzeugung eines Folienschlauches und
- Fig. 2: ein Verfahrensschema für die Durchführung des erfindungsgemäßen Verfahrens.

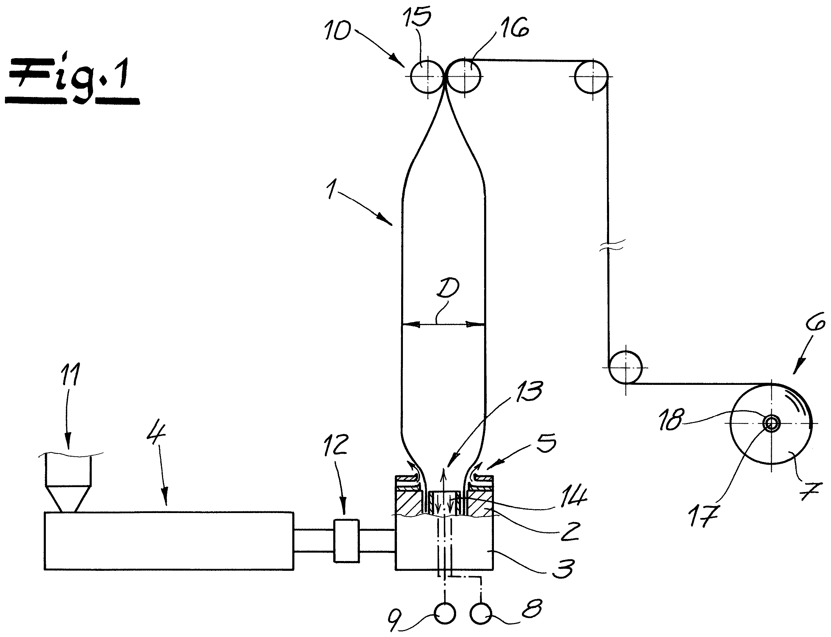

Die Fig. 1 zeigt eine erfindungsgemäße Folienherstellungsanlage in Form einer Blasfolienanlage zur Herstellung eines Folienschlauches 1 bzw. einer daraus gebildeten Folienbahn. Der Folienschlauch wird dabei aus einer Ringschlitzdüse 2 eines Blaskopfes 3 extrudiert. Dazu wird der Kunststoff bzw. die Kunststoffschmelze dem Blaskopf 3 bzw. der Ringschlitzdüse 2 mittels eines Extruders 4 zugeführt. Der extrudierte Folienschlauch 1 wird vorzugsweise und im Ausführungsbeispiel mittels einer Kühlvorrichtung 5 gekühlt, mit Hilfe einer Abzugsvorrichtung 10 abgezogen und flachgelegt sowie mittels einer Wickelvorrichtung 6 zum Folienwickel 7 bzw. zum Foliencoil aufgewickelt.

Zweckmäßigerweise und im Ausführungsbeispiel wird der Kunststoff in Form von Kunststoffgranulat dem Extruder 4 über einen Dosiertrichter 11 zugeführt. Mit dem Extruder 4 wird die Kunststoffschmelze bevorzugt und im Ausführungsbeispiel über ein Reinigungssieb 12 dem Blaskopf 3 bzw. der Ringschlitzdüse 2 zugeleitet. Es liegt im Rahmen der Erfindung, dass die Ringschlitzdüse 2 beheizt ausgebildet ist.

Zweckmäßigerweise wird der extrudierte Folienschlauch 1 mit in den Schlauch eingeführter Zuluft 13 bzw. Blasluft aufgeblasen. Hierzu ist zweckmäßigerweise ein Zuluftgebläse 9 vorgesehen. Fernerhin wird bevorzugt und im Ausführungsbeispiel Abluft 14 aus dem Folienschlauch 1 wieder abgezogen und zwar mittels einer Abluftabführungsvorrichtung, die mit einem Abluftgebläse 8 ausgerüstet ist. - In der Fig. 1 ist erkennbar, dass der Folienschlauch vorzugsweise und im Ausführungsbeispiel vertikal von unten nach oben extrudiert wird, so dass auch die Zuluft 13 von unten - bevorzugt und im Ausführungsbeispiel durch den Blaskopf 3 - zugeführt wird und dass die Abluft 14 nach unten - zweckmäßigerweise und im Ausführungsbeispiel durch den Blaskopf 3 - abgeführt wird. Nach bevorzugter Ausführungsform und im Ausführungsbeispiel wird mit der Kühlvorrichtung 5 Kühlluft von unten an der Außenoberfläche des Folienschlauches 1 entlanggeführt.

Die Abzugsvorrichtung 10 zum Abziehen und Flachlegen des Folienschlauches 1 weist im Ausführungsbeispiel Abzugsrollen 15, 16 auf. Dies ist rein schematisch dargestellt und hier können natürlich weitere Rollen, Umlenkrollen und dergleichen vorhanden sein. In diesem Zusammenhang kann auch eine geeignete Reversiereinheit eingesetzt werden. Der flachgelegte Folienschlauch 1 wird der Wickelvorrichtung 6 zugeführt und hier wird der Folienschlauch 1 zum Folienwickel 7 aufgewickelt. Dazu umfasst die Wickelvorrichtung 6 eine rotierbare Wickelwelle 17, auf die eine Wickelhülse 18 aufgeschoben ist. Auf diese Wickelhülse 18 wird der Folienschlauch 1 bzw. die Folienbahn aufgewickelt. Nach dem Fertigwickeln wird der Folienwickel mitsamt der Wickelhülse 18 von der Wickelwelle 17 der Wickelvorrichtung 6 entfernt.

Im Ausführungsbeispiel nach Fig. 1 ist die Herstellung einer einschichtigen Folie bzw. eines einschichtigen Folienschlauches 1 mit nur einem Extruder 4 dargestellt. Bei der Herstellung einer mehrschichtigen Folie werden zweckmäßigerweise entsprechend mehrere Extruder 4 eingesetzt.

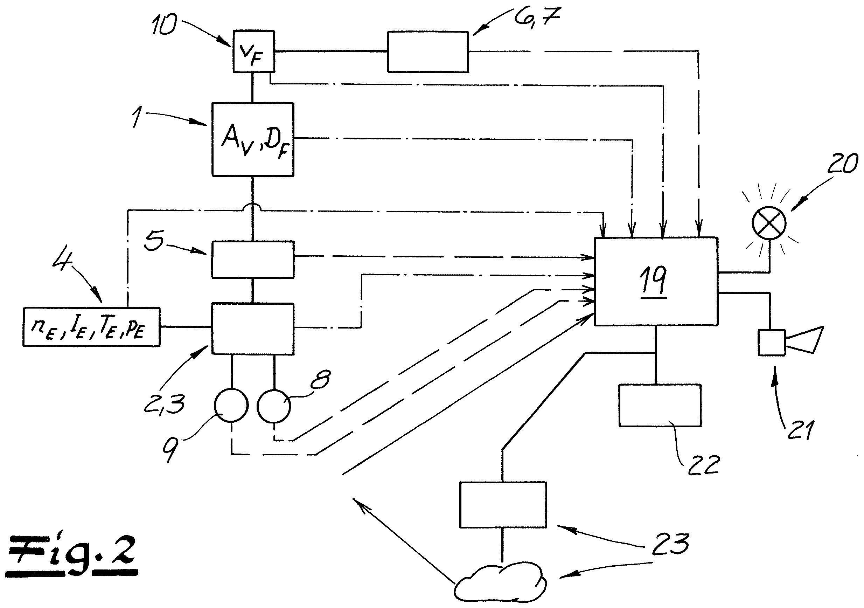

Die Fig. 2 veranschaulicht die erfindungsgemäße Verfahrensweise, insbesondere zur Bestimmung eines Ausgangsparameters, schematisch. Gleiche Anlagenkomponenten sind hier mit den gleichen Bezugsziffern versehen wie in der Fig. 1. Im vorliegenden Fall soll die Zugfestigkeit der hergestellten Folie als Ausgangsparameter bestimmt werden. Nach bevorzugter Ausführungsform der Erfindung wird zunächst eine Zugfestigkeit der Folie in einem Referenzbetrieb bzw. in einem störungsfreien Normalbetrieb der erfindungsgemäßen Anlage gemessen. Es liegt dabei im Rahmen der Erfindung, dass die Zugfestigkeit der Folie offline gemessen wird. Dazu wird die Zugfestigkeit der Folie entsprechend den bekannten Normen bei bzw. nach störungsfreiem Normalbetrieb der Anlage bestimmt. Die hier gemessene Zugfestigkeit wird der nachfolgenden Auswertung als Referenzparameter zugrunde gelegt. Anschließend wird als Ausgangsparameter die Zugfestigkeit mit Hilfe von Eingangsparametern ermittelt und diese als Ausgangsparameter ermittelte Zugfestigkeit wird mit dem Referenzwert der Zugfestigkeit verglichen.

Als erste Eingangsparameter werden Eingangsparameter des Extruders 4 im laufenden Betrieb der Anlage gemessen. Dabei handelt es sich um die Extruderdrehzahl n_{E} (Drehzahl der Extruderschnecke), das Extruderdrehmoment I_{E} (Drehmoment der Extruderschnecke), die Extrudertemperatur T_{E} (Temperatur im Extruder) und den Schmelzedruck p_{E} (Druck im Extruder). Diese Eingangsparameter werden mit entsprechenden Messsensoren, nämlich einem Drehzahlsensor, einem Drehmomentsensor, einem Temperatursensor und einem Drucksensor gemessen. Fernerhin wird als Eingangsparameter die Ringschlitzdüsentemperatur T_{R} mit einem Temperatursensor gemessen. Einen weiteren Eingangsparameter bildet das Aufblasverhältnis Aᵥ des Folienschlauches 1. Dieses wird bestimmt durch den Quotienten aus dem Durchmesser des aufgeblasenen Folienschlauches 1 und dem Durchmesser der Ringschlitzdüse 2. Alternativ zur Messung des Durchmessers D des Folienschlauches kann auch die Breite B des flachgelegten Folienschlauches 1 gemessen werden und der Durchmesser D des Folienschlauches berechnet sich nach der Formel D = 2B/π und damit kann dann der Quotient zur Bestimmung des Aufblasverhältnisses Av ermittelt werden. Einen weiteren Eingangsparameter bildet die Abzugsgeschwindigkeit v_{F} des Folienschlauches 1. Diese kann beispielsweise aus der Drehgeschwindigkeit der Abzugsrollen 15, 16 ermittelt werden und auch zur Bestimmung der Drehgeschwindigkeit kann eine entsprechende Messvorrichtung vorhanden sein. Die Abzugsgeschwindigkeit kann aber auch als fester Anlagenparameter für den Eingangsparameter vorgegeben werden. Schließlich wird als Eingangsparameter die Gesamtschichtdicke D_{F} der Folie bzw. des Folienschlauches 1 herangezogen. Diese Foliendicke kann mit einem entsprechenden Dickenmesssensor gemessen werden. Die Foliendicke kann dabei beispielsweise durch Infrarot-Messung, durch β-Strahlen-Rückstreuung oder induktiv gemessen werden.

Die vorgenannten sieben Eingangsparameter n_{E}, I_{E}, T_{E}, p_{E}, A_{V}, v_{F} und DF werden nach empfohlener Ausführungsform der Erfindung einer als Computer ausgebildeten Auswertungseinrichtung 19 zugeführt. Hier wird aus diesen sieben Eingangsparametern die Zugfestigkeit als Ausgangsparameter ermittelt bzw. berechnet und der Wert dieses Ausgangsparameters wird zweckmäßigerweise mit dem Wert der als Referenzparameter gemessenen Zugfestigkeit verglichen. Es empfiehlt sich, dass die vorgenannten Messungen bzw. Bestimmungen der Eingangsparameter, die Ermittlung des Ausgangsparameters aus diesen Eingangsparametern und der Vergleich des Wertes des Ausgangsparameters mit dem Wert des Referenzparameters laufend im Betrieb der Anlage durchgeführt werden. Auf diese Weise kann mittels der Auswertungseinrichtung 19 eine Abweichung zwischen den Zugfestigkeiten von Ausgangsparameter und Referenzparameter erkannt werden und bevorzugt wird eine dabei auftretende nennenswerte Anomalie signalisiert. Es liegt im Rahmen der Erfindung, dass die Signalisierung mittels einer visuellen Signaleinrichtung 20 und/oder mittels einer akustischen Signaleinrichtung 21 erfolgt. Die Signalisierung einer Anomalie kann alternativ oder zusätzlich über ein HMI 22 (Human Machine Interface) und/oder durch eine Cloud-Anbindung 23 (per E-Mail, SMS und dergleichen) vermittelt werden.

Nach einer empfohlenen Ausführungsform wird bei der Auswertung wie folgt verfahren: Es wird zunächst ermittelt, welcher Werte-Satz von Eingangsparametern - im bevorzugten Ausführungsbeispiel also ein Satz von sieben Werten von sieben Eingangsparametern - bzw. welche Werte-Sätze von Eingangsparametern zu dem im störungsfreien Normalbetrieb gemessenen Wert des Referenzparameters passen. Im laufenden Betrieb der Anlage werden dann die jeweils gemessenen bzw. ermittelten aktuellen Werte-Sätze der Eingangsparameter mit dem dem Referenzwert des Referenzparameters entsprechenden Werte-Satz an Eingangsparametern verglichen. Wenn eine Übereinstimmung bzw. eine quasi-Übereinstimmung festgestellt wird, erfolgt zweckmäßigerweise keine Alarmmeldung. Bei Feststellung einer Abweichung bzw. Anomalie wird diese dagegen signalisiert bzw. es wird eine entsprechende Alarmmeldung signalisiert bzw. gesendet.

Die Feststellung bzw. Signalisierung einer Abweichung/Anomalie ermöglicht es dem Betreiber der Anlage die Anlage bei Bedarf rechtzeitig abzuschalten, beispielsweise Verunreinigungen oder dergleichen zu entfernen und anschließend die Produktion erneut zu starten. Damit wird vermieden, dass es zu Schäden an der Anlage oder zu längeren unerwarteten Stillstandzeiten kommt. Grundsätzlich kann nach Erkennen bzw. Signalisierung einer Anomalie auch durch Steuerung und/oder Regelung auf einzelne Anlagenkomponenten eingewirkt werden, um die Anomalie bzw. Abweichung zu beseitigen.

## Patentansprüche

1. Verfahren zur Herstellung einer Kunststofffolie aus thermoplastischem Kunststoff in einer Folienherstellungsanlage durch Extrusion aus einer Düse - insbesondere durch Extrusion eines Folienschlauches aus einer Ringschlitzdüse eines Blaskopfes oder durch Extrusion einer Folienbahn aus einer Breitschlitzdüse -, wobei der Kunststoff bzw. die Kunststoffschmelze der Düse mittels zumindest eines Extruders zugeführt wird, wobei anschließend der Folienschlauch bzw. die Folienbahn aus der Düse extrudiert wird, vorzugsweise mit Hilfe einer Kühlvorrichtung gekühlt wird und mittels einer Wickelvorrichtung zum Folienwickel bzw. Foliencoil aufgewickelt wird,
**dadurch gekennzeichnet, dass** eine Mehrzahl von Referenzparametern, nämlich zumindest zwei Referenzparameter, vorzugsweise zumindest drei Referenzparameter zur Verfügung gestellt wird, dass im laufenden Betrieb der Anlage eine Vielzahl von von den Referenzparametern verschiedenen Eingangsparametern mit Hilfe von Messvorrichtungen gemessen wird und dass aus diesen gemessenen Eingangsparametern mittels zumindest einer Auswertungseinrichtung eine Mehrzahl von den Referenzparametern entsprechenden Ausgangsparametern ermittelt wird,
dass die Referenzparameter bzw. Ausgangsparameter aus den den eingesetzten Kunststoff betreffenden Parametern aus der Gruppe "Rohstoffdichte, Schüttdichte, Dosierungsmenge, Schmelzedichte, Förderrate, Schmelzeleckage" ausgewählt werden, dass die Eingangsparameter aus der Gruppe "Schmelzedruck, Extrudertemperatur, Extruderdrehzahl, Extruderdrehmoment, Schmelzetemperatur" ausgewählt werden
und dass bei einer Abweichung zumindest eines ermittelten Wertes eines Ausgangsparameters von zumindest einem Wert eines Referenzparameters eine Anomalie des Ausgangsparameters signalisiert wird.

2. Verfahren zur Herstellung einer Kunststofffolie aus thermoplastischem Kunststoff in einer Folienherstellungsanlage durch Extrusion aus einer Düse, wobei der Kunststoff bzw. die Kunststoffschmelze der Düse mittels zumindest eines Extruders zugeführt wird, wobei anschließend der Folienschlauch bzw. die Folienbahn aus der Düse extrudiert wird, vorzugsweise mit Hilfe einer Kühlvorrichtung gekühlt wird und mittels einer Wickelvorrichtung zum Folienwickel bzw. Foliencoil aufgewickelt wird,
**dadurch gekennzeichnet, dass** eine Mehrzahl von Referenzparametern, nämlich zumindest zwei Referenzparameter, vorzugsweise zumindest drei Referenzparameter zur Verfügung gestellt wird , dass im laufenden Betrieb der Anlage eine Vielzahl von von den Referenzparametern verschiedenen Eingangsparametern mit Hilfe von Messvorrichtungen gemessen wird und dass aus diesen gemessenen Eingangsparametern mittels zumindest einer Auswertungseinrichtung eine Mehrzahl von den Referenzparametern entsprechenden Ausgangsparametern ermittelt wird,
dass die Folienherstellungsanlage eine Blasfolienanlage ist, bei der die Kunststofffolie als Folienschlauch aus der Ringschlitzdüse eines Blaskopfes extrudiert wird, dass der Folienschlauch aufgeblasen wird und in Extrusionsrichtung verstreckt wird, vorzugsweise zusätzlich quer zur Extrusionsrichtung querverstreckt wird,
dass die Referenzparameter bzw. Ausgangsparameter aus den Parametern aus der Gruppe "Foliendehnbarkeit, Zugfestigkeit der Folie" ausgewählt werden und dass die Eingangsparameter aus der Gruppe "Blaskopftemperatur bzw. Ringschlitzdüsentemperatur, Extruderdrehzahl, Extruderdrehmoment, Extrudertemperatur, Schmelzedruck, Abzugsgeschwindigkeit, Aufblasverhältnis, Gesamtschichtdicke der Folie, Schmelzeflussrate (MFI) des eingesetzten Kunststoffes bzw. der eingesetzten Kunststoffe" ausgewählt werden,
und/oder dass ein Referenzparameter bzw. Ausgangsparameter die "Breite" bzw. die "Breitenänderung" des Folienschlauches ist und dass die Eingangsparameter aus der Gruppe "Drehzahl eines Zuluftgebläses, Öffnungsweite bzw. -querschnitt der Zuluftzuführung, Drehzahl eines Abluftgebläses, Position des aufgeblasenen Folienschlauches" ausgewählt werden
und dass bei einer Abweichung zumindest eines ermittelten Wertes eines Ausgangsparameters von zumindest einem Wert eines Referenzparameters eine Anomalie des Ausgangsparameters signalisiert wird.

3. Verfahren nach einem der Ansprüche 1 oder 2, **dadurch gekennzeichnet, dass** der ermittelte Ausgangsparameter mit dem Referenzparameter verglichen wird, insbesondere laufend verglichen wird.

4. Verfahren nach einem der Ansprüche 1 bis 3, **dadurch gekennzeichnet, dass** bei einer Abweichung zumindest eines ermittelten Wertes des Ausgangsparameters von zumindest einem Wert bzw. Messwert des Referenzparameters eine Anomalie des Ausgangsparameters durch zumindest ein Signal angezeigt wird, insbesondere durch ein visuelles und/oder akustisches Signal angezeigt wird und dass vorzugsweise die Anomalie dokumentiert und zweckmäßigerweise in einen unabhängigen Speicher gespeichert wird.

5. Verfahren nach einem der Ansprüche 1 bis 4, **dadurch gekennzeichnet, dass** der zumindest eine Referenzparameter mit zumindest einer Referenzmessvorrichtung in einem Referenzbetrieb der Anlage gemessen wird und/oder dass der Referenzparameter als Erfahrungsparameter vorgegeben wird.

6. Verfahren nach einem der Ansprüche 1 bis 5, **dadurch gekennzeichnet, dass** zumindest ein Eingangsparameter als fester bzw. konstanter Anlagenparameter vorgegeben wird und zur Ermittlung des Ausgangsparameters eingesetzt wird und dass die weiteren Eingangsparameter gemessen werden.

7. Verfahren nach einem der Ansprüche 1 bis 6, **dadurch gekennzeichnet, dass** zumindest ein Referenzparameter bzw. der Referenzwert des Referenzparameters berechnet wird und vorzugsweise dem Vergleich mit dem Ausgangsparameter zugrunde gelegt wird und/oder das zumindest ein Eingangsparameter berechnet wird, wobei dieser berechnete Eingangsparameter in die Ermittlung des Ausgangsparameters eingeht.

8. Verfahren nach einem der Ansprüche 1 bis 7, **dadurch gekennzeichnet, dass** die Kunststofffolie als mehrschichtige Folie extrudiert bzw. koextrudiert wird, dass hierzu eine Mehrzahl von Extrudern eingesetzt wird, dass der Referenzparameter bzw. Ausgangsparameter die "Verteilung der Einzelschichtdicken" der mehrschichtigen Folie ist und dass die Eingangsparameter aus der Gruppe "Düsentemperatur, Extruderdrehzahlen, Extruderdrehmomente, Extrudertemperaturen, Extruderdrücke, Abzugsgeschwindigkeit, Gesamtschichtdicke, Aufblasverhältnis" ausgewählt werden.

9. Verfahren nach einem der Ansprüche 1 bis 8, **dadurch gekennzeichnet, dass** der Referenzparameter bzw. Ausgangsparameter die "Wickeldichte" des erzeugten Folienwickels bzw. Foliencoils ist und dass die Eingangsparameter aus der Gruppe "Durchmesser der Wickelwelle, Wanddicke der Wickelhülse, Durchmesser des Folienwickels, theoretischer Durchmesser des Folienwickels" ausgewählt werden.

10. Verfahren nach einem der Ansprüche 1 bis 9, **dadurch gekennzeichnet, dass** aus der Mehrzahl von Referenzparametern ein Referenzmodell ermittelt wird und dass aus der Vielzahl von Eingangsparametern ein Ausgangsmodell ermittelt wird und dass bei Abweichung des Ausgangsmodells von dem Referenzmodell eine Anomalie des Ausgangsmodells signalisiert wird.

11. Folienherstellungsanlage zur Herstellung einer Kunststofffolie aus thermoplastischem Kunststoff, mit einer Ringschlitzdüse eines Blaskopfes zur Extrusion eines Folienschlauches oder mit einer Breitschlitzdüse zur Extrusion einer Folienbahn, zur Durchführung des Verfahrens nach einem der Ansprüche 1 bis 10, wobei zumindest ein Extruder vorgesehen ist, mit dem der Kunststoff bzw. die Kunststoffschmelze der Düse zuführbar ist, wobei der Folienschlauch bzw. die Folienbahn aus der Düse extrudierbar ist und wobei eine Kühlvorrichtung vorhanden ist, mit der der extrudierte Folienschlauch bzw. die extrudierte Folienbahn kühlbar ist und wobei fernerhin eine Wickelvorrichtung vorgesehen ist, mit der der abgezogene und vorzugsweise flachgelegte Folienschlauch bzw. die abgezogene Folienbahn zu einem Folienwickel bzw. zu einem Foliencoil aufwickelbar ist,
**dadurch gekennzeichnet, dass** fernerhin zumindest eine Messvorrichtung, insbesondere zumindest ein Messsensor zur Messung von Eingangsparametern vorgesehen ist, dass die zumindest eine Messvorrichtung bzw. der zumindest eine Messsensor im Bereich des Extruders und/oder im Bereich der Düse und/oder im Bereich einer Zuluftzuführung und/oder im Bereich des extrudierten Folienschlauches bzw. der extrudierten Folienbahn und/oder im Bereich einer Kühlvorrichtung im Bereich einer Abluftabführung und/oder im Bereich einer Abzugsvorrichtung und/oder im Bereich einer Verstreckeinrichtung und/oder im Bereich einer Wickelvorrichtung angeordnet ist, dass weiterhin zumindest eine Auswertungseinrichtung vorhanden ist, die mit der Maßgabe eingerichtet ist, dass aus den gemessenen Eingangsparametern ein Ausgangsparameter ermittelbar ist und dass der mit Hilfe der Auswertungseinrichtung ermittelte Ausgangsparameter mit einem zur Verfügung gestellten Referenzparameter vergleichbar ist.

## Claims

1. A method for producing a plastic film from thermoplastic plastic in a film production installation by extrusion from a die - in particular by extrusion of a film tubing from a ring slot die of a blow head or by extrusion of a film web from a wide slot die -, wherein the plastic or the plastic melt is fed to the die by means of at least one extruder, wherein the film tubing or the film web is then extruded from the die, is cooled preferably with the aid of a cooling device and is wound up by means of a winding device to form a film roll or a film coil,
**characterised in that** a plurality of reference parameters, i.e. at least two reference parameters, preferably at least three reference parameters, are made available, that in the course of the operation of the installation a multiplicity of input parameters different from the reference parameters are measured with the aid of measuring devices and that a plurality of output parameters corresponding to the reference parameters are determined from these measured input parameters by means of at least one evaluation device,
that the reference parameters or output parameters are selected from the parameters relating to the plastic used from the group "raw material density, bulk density, metering quantity, melt density, feed rate, melt leakage", that the input parameters are selected from the group "melt pressure, extruder temperature, extruder speed, extruder torque, melt temperature" and that,
in the event of a deviation of at least one ascertained value of an output parameter from at least one value of a reference parameter, an anomaly of the output parameter is signalled.

2. The method for producing a plastic film from thermoplastic plastic in a film production installation by extrusion from a die, wherein the plastic or the plastic melt is fed to be die by means of at least one extruder, wherein the film tubing or the film web is then extruded from the die, is cooled preferably with the aid of a cooling device and is wound up by means of a winding device to form a film roll or a film coil,
**characterised in that** a plurality of reference parameters, i.e. at least two reference parameters, preferably at least three reference parameters, are made available, that in the course of the operation of the installation a multiplicity of input parameters different from the reference parameters are measured with the aid of measuring devices and that a plurality of output parameters corresponding to the reference parameters are determined from these measured input parameters by means of at least one evaluation device,
that the film production installation is a blown film installation, wherein the plastic film is extruded as a film tubing from the ring slot die of a blow head, that the film tubing is blown up and is stretched in the extrusion direction, preferably in addition is stretched crosswise normal to the extrusion direction,
that the reference parameters or output parameters are selected from the parameters from the group "film extensibility, tensile strength of the film" and that the input parameters are selected from the group "blow head temperature or ring slot die temperature, extruder speed, extruder torque, extruder temperature, melt pressure, haul-off speed, blow-up ratio, total layer thickness of the film, melt flow index (MFI) of the plastic used or the plastics used",
and/or that a reference parameter or output parameter is the "width" or the "change in width" of the film tubing and that the input parameters are selected from the group "speed of an incoming air blower, opening or cross-section of the of the incoming air supply, speed of an outgoing air blower, position of the blown-up film tubing"
and that, in the event of a deviation of at least one ascertained value of an output parameter from at least one value of a reference parameter, an anomaly of the output parameter is signalled.

3. The method according to any one of claims 1 or 2, **characterised in that** the determined output parameter is compared with the reference parameter, in particular is compared continuously.

4. The method according to any one of claims 1 to 3, **characterised in that**, in the event of a deviation of at least one ascertained value of the output parameter from at least one value or measured value of the reference parameter, an anomaly of the output parameter is indicated by at least one signal, in particular is indicated by a visual and/or acoustic signal, and that the anomaly is preferably documented and expediently stored in an independent memory.

5. The method according to any one of claims 1 to 4, **characterised in that** the at least one reference parameter is measured using at least one reference measuring device in a reference operation of the installation and/or that the reference parameter is defined as an empirical parameter.

6. The method according to any one of claims 1 to 5, **characterised in that** at least one input parameter is defined as a fixed or constant installation parameter and is used to determine the output parameter and that the further input parameters are measured.

7. The method according to any one of claims 1 to 6, **characterised in that** at least one reference parameter or the reference value of the reference parameter is calculated and preferably forms the basis for the comparison with the output parameter and/or the at least one input parameter is calculated, wherein this calculated input parameter enters into the determination of the output parameter.

8. The method according to any one of claims 1 to 7, **characterised in that** the plastic film is extruded or coextruded as a multi-layer film, that a plurality of extruders is used for this purpose, that the reference parameter or output parameter is the "distribution of the individual layer thicknesses" of the multilayer film and that the input parameters are selected from the group "die temperature, extruder speeds, extruder torques, extruder temperatures, extruder pressures, haul-off speed, total layer thickness, blow-up ratio".

9. The method according to any one of claims 1 to 8, **characterised in that** the reference parameter or output parameter is the "winding density" of the produced film roll or film coil and that the input parameters are selected from the group "diameter of the winding shaft, wall thickness of the winding tube, diameter of the film roll, theoretical diameter of the film roll".

10. The method according to any one of claims 1 to 9, **characterised in that** a reference model is determined from the plurality of reference parameters and that an output model is determined from the multiplicity of input parameters and that, in the event of a deviation of the output model from the reference model, an anomaly of the output model is signalled.

11. A film production installation for the production of a plastic film from thermoplastic plastic, with a ring slot die of a blow head for the extrusion of a film tubing or with a wide slot die for the extrusion of a film web, for carrying out the method according to any one of claims 1 to 10, wherein at least one extruder is provided, with which the plastic or the plastic melt can be fed to the die, wherein the film tubing or the film web can be extruded from the die and wherein a cooling device is present, with which the extruded film tubing or the extruded film web can be cooled and, furthermore, wherein a winding device is provided, with which the hauled-off and preferably flattened film tubing or the hauled-off film web can be wound up to form a film roll or a film coil,
**characterised in that**, furthermore, at least one measuring device, in particular at least one measuring sensor for measuring input parameters is provided, that the at least one measuring device or the at least one measuring sensor is arranged in the region of the extruder and/or in the region of the die and/or in the region of the incoming air supply and/or in the region of the extruded film tubing or the extruded film web and/or in the region of a cooling device in the region of an outgoing air discharge and/or in the region of a haul-off device and/or in the region of a stretching device and/or in the region of a winding device, that furthermore at least one evaluation device is present, which is configured with the provision that an output parameter can be determined from the measured input parameters and that the output parameter determined with the aid of the evaluation device can be compared with a reference parameter made available.

## Revendications

1. Procédé de fabrication d'un film en matière plastique composé de matière thermoplastique dans une installation de fabrication de film par extrusion hors d'une buse - en particulier par extrusion d'un tuyau de film à partir d'une buse à fente annulaire d'une tête de soufflage ou par extrusion d'une bande de film à partir d'une buse à fente large -, la matière plastique ou la coulée de matière plastique de la buse étant acheminée à l'aide d'au moins une extrudeuse, le tuyau en plastique ou la bande de film étant ensuite extrudé hors de la buse, étant de préférence refroidi à l'aide d'un dispositif de refroidissement et enroulé au moyen d'un dispositif d'enroulement pour former une bobine de film ou une boucle de film,
**caractérisé en ce qu'**une pluralité de paramètres de référence, à savoir au moins deux paramètres de référence, de préférence au moins trois paramètres de référence, sont mis à disposition, que, en cours de fonctionnement de l'installation, une multitude de paramètres d'entrée différents des paramètres de référence sont mesurés à l'aide de dispositifs de mesure et que, à partir de ces paramètres d'entrée mesurés, une pluralité de paramètres de sortie correspondant aux paramètres de référence sont déterminés à l'aide d'au moins un dispositif d'exploitation,
**que** les paramètres de référence ou paramètres de sortie sont sélectionnés parmi les paramètres concernant la matière plastique utilisés du groupe « densité de matières premières, densité de vrac, quantité de dosage, densité de coulée, vitesse de transport, fuites de coulée », que les paramètres d'entrée sont sélectionnés dans le groupe « pression de coulée, température d'extrusion, vitesse de rotation de l'extrudeuse, couple de rotation de l'extrudeuse, température de fusion » et que,
en cas d'écart d'au moins une valeur déterminée d'un paramètre de sortie par rapport à au moins une valeur d'un paramètre de référence, une anomalie du paramètre de sortie est signalée.

2. Procédé de fabrication d'un film en matière plastique composé de matière thermoplastique dans une installation de fabrication de film par extrusion hors d'une buse, la matière plastique ou la coulée de matière plastique de la buse étant acheminée à l'aide d'au moins une extrudeuse, le tuyau en plastique ou la bande de film étant ensuite extrudé hors de la buse, étant de préférence refroidi à l'aide d'un dispositif de refroidissement et enroulé au moyen d'un dispositif d'enroulement pour former une bobine de film ou une boucle de film,
**caractérisé en ce qu'**une pluralité de paramètres de référence, à savoir au moins deux paramètres de référence, de préférence au moins trois paramètres de référence, sont mis à disposition, que, en cours de fonctionnement de l'installation, une multitude de paramètres d'entrée différents des paramètres de référence sont mesurés à l'aide de dispositifs de mesure et que, à partir de ces paramètres d'entrée mesurés, une pluralité de paramètres de sortie correspondant aux paramètres de référence sont déterminés à l'aide d'au moins un dispositif d'exploitation,
**que** l'installation de fabrication de film est une installation de fabrication de film soufflé dans laquelle le film en matière plastique est extrudé sous forme d'un tuyau de film hors de la buse à fente annulaire d'une tête de soufflage, que le tuyau de film soufflé est étiré dans le sens de l'extrusion, de préférence étiré en plus transversalement au sens d'extrusion,
**que** les paramètres de référence ou paramètres de sortie sont sélectionnés parmi les paramètres du groupe « densité de matières premières, densité de vrac, résistance à la traction du film » et que les paramètres d'entrée sont sélectionnés dans le groupe « température de la tête de soufflage ou température de la buse à fente annulaire, vitesse de rotation de l'extrudeuse, couple de rotation de l'extrudeuse, température d'extrusion, pression de coulée, vitesse d'extraction, comportement au soufflage, épaisseur totale de couches du film, débit de coulée (MFI) de la matière plastique utilisée ou des matières plastiques utilisées »,
et/ou qu'un paramètre de référence ou paramètre de sortie est la « largeur » ou le « changement de largeur » du tuyau de film et que les paramètres d'entrée sont sélectionnés dans le groupe « vitesse de rotation d'une soufflerie d'air d'alimentation, largeur ou section transversale d'ouverture de la conduite d'air d'alimentation, vitesse de rotation d'une soufflerie d'air d'évacuation, position du tuyau de film soufflé » et que,
en cas d'écart, au moins une valeur déterminée d'un paramètre de sortie par rapport à au moins une valeur d'un paramètre de référence, une anomalie du paramètre de sortie est signalée.

3. Procédé selon une des revendications 1 ou 2, **caractérisé en ce que** le paramètre de sortie déterminé est comparé au paramètre de référence, en particulier comparé en continu.

4. Procédé selon une des revendications 1 à 3, **caractérisé en ce que**, en cas d'écart d'au moins une valeur déterminée du paramètre de sortie par rapport à au moins une valeur ou valeur de mesure du paramètre de référence, une anomalie du paramètre de sortie est affichée par au moins un signal, en particulier par un signal visuel et/ou acoustique et que l'anomalie est de préférence documentée et enregistrée judicieusement dans une mémoire indépendante.

5. Procédé selon une des revendications 1 à 4, **caractérisé en ce que** l'au moins un paramètre de référence est mesuré avec au moins un dispositif de mesure de référence en mode référence de l'installation et/ou que le paramètre de référence est prédéfini comme paramètre d'expérience.

6. Procédé selon une des revendications 1 à 5, **caractérisé en ce qu'**au moins un paramètre d'entrée est prédéfini comme paramètre d'installation fixe ou constant et utilisé pour déterminer le paramètre de sortie et que les autres paramètres d'entrée sont mesurés.

7. Procédé selon une des revendications 1 à 6, **caractérisé en ce qu'**au moins un paramètre de référence ou la valeur de référence du paramètre de référence est calculé et est de préférence pris comme base pour la comparaison avec le paramètre de sortie et/ou qu'au moins un paramètre d'entrée est calculé, ce paramètre d'entrée entrant dans la détermination du paramètre de sortie.

8. Procédé selon une des revendications 1 à 7, **caractérisé en ce que** le film en matière plastique est extrudé ou coextrudé sous forme d'un film multicouche, qu'une pluralité d'extrudeuses sont utilisés à cet effet, que le paramètre de référence ou paramètre de sortie est la « répartition des épaisseurs de couches individuelles » du film multicouche et que les paramètres d'entrée sont sélectionnés dans le groupe « température de buse, vitesse de rotation d'extrudeuse, couple de rotation d'extrudeuse, température d'extrusion, pression d'extrusion, vitesse d'extraction, épaisseur totale des couches, comportement au soufflage ».

9. Procédé selon une des revendications 1 à 8, **caractérisé en ce que** le paramètre de référence ou paramètre de sortie est la « densité d'enroulement » de la bobine de film ou boucle de film générée et que les paramètres d'entrée sont sélectionnés dans le groupe « diamètre de l'arbre d'enroulement, épaisseur de paroi du tube d'enroulement, diamètre de bobine de film, diamètre théorique de bobine de film ».

10. Procédé selon une des revendications 1 à 9, **caractérisé en ce que**, à partir de la pluralité de paramètres de référence, un modèle de référence est déterminé et que, à partir de la multitude de paramètres d'entrée, un modèle de sortie est déterminé et que, en cas d'écart du modèle de sortie par rapport au modèle de référence, une anomalie du modèle de sortie est signalée.

11. Installation de fabrication de film pour la fabrication d'un film en matière plastique à partir de matière thermoplastique, comportant une buse à fente annulaire d'une tête de soufflage pour l'extrusion d'un tuyau de film ou une buse à fente large pour l'extrusion d'une bande de film, pour la réalisation du procédé selon une des revendications 1 à 10, étant prévue au moins une extrudeuse grâce à laquelle la matière plastique ou la coulée de matière plastique peut être acheminée vers la buse, le tuyau de film ou la bande de film pouvant être extrudé hors de la buse et étant prévu un dispositif de refroidissement grâce auquel le tuyau de film ou la bande de film extrudé peut être refroidi et étant prévu en outre un dispositif d'enroulement grâce auquel le tuyau de film extrait est de préférence mis à plat ou la bande de film extraite peut être enroulée en une bobine de fil ou en une boucle de film,
**caractérisé en ce qu'**il est prévu en outre au moins un dispositif de mesure, en particulier au moins un capteur de mesure pour la mesure de paramètres d'entrée, que l'au moins un dispositif de mesure ou l'au moins un capteur de mesure est disposé au niveau de l'extrudeuse et/ou au niveau de la buse et/ou au niveau d'une conduite d'alimentation en air et/ou au niveau du tuyau de film extrudé ou de la bande de film extrudé et/ou au niveau d'un dispositif de refroidissement au niveau d'une sortie d'évacuation d'air et/ou au niveau d'un dispositif d'extraction et/ou au niveau d'un dispositif d'étirage et/ou au niveau d'un dispositif d'enroulement, et qu'il est prévu en outre au moins un dispositif d'exploitation qui est aménagé sous réserve que, à partir des paramètres d'entrée mesurés, un paramètre de sortie soit déterminable et que le paramètre de sortie déterminé à l'aide du dispositif d'exploitation soit comparable avec un paramètre de référence mis à disposition.
